# EUROPEAN PATENT APPLICATION

(11) **EP 3 945 106 A1**
(43) Date of publication of application: **02.02.2022**
(21) Application number: 21176117.6
(22) Date of filing: 27.05.2021
(51) Int. Cl.: C08J 9/32, A41B 9/12, C08J 9/36, C08J 9/40, A41D 13/015

(54) **PERFECTED SELF-MODELLING PADDING, GARMENT OR SUPPORT COMPRISING SAID SELF-MODELLING PADDING, AND MANUFACTURING METHOD THEREOF**

(30) Priority: 30.07.2020 IT 202000018607
(71) Applicant: SELLE ITALIA S.r.l., 31011 Asolo (TV) (IT)
(72) Inventor: BIGOLIN, Giuseppe, I-31011 Asolo, TREVISO (IT); PEROTTO, Riccardo, I-31011 Asolo, TREVISO (IT)
(74) Representative: Mitola, Marco

(57) **Abstract**

A self-modelling padding, in particular for garments or supports, comprising an elastomeric matrix, comprising a cross-linked, three-dimensional, open/cell structure, a self-modelling paste, embedded in said elastomeric matrix, wherein said elastomeric matrix is configured to have a shape memory, wherein said self-modelling paste has a plastic behaviour.

## Description

### FIELD OF APPLICATION

The present invention relates to an improved self-modelling padding, a garment or support comprising said self-modelling padding, and the manufacturing method thereof.

### BACKGROUND ART

The use of padding, e.g., for garments, is well-known in sports, but not only, to create a cushioning pad capable of improving the comfort of the garment itself or the comfort between the user and a support, e.g., such as a seat, a saddle of a bicycle or motorcycle, a backrest, a shoe insole, a handlebar grip cover, a protective garment, a protection for elbows/knees/shoulders and so on.

The same applies, for example, in the area of footwear, and also for gloves, for helmets and so on.

Therefore, it is apparent that the problem of comfort applies transversally to a variety of sports and other sectors.

Such a problem has been widely addressed in the background art through the creation of special inserts or pads which have the function of limiting/dampening the shocks, vibrations, rubbing with the user's anatomical parts.

Nevertheless, the solutions of the known art fail to ensure comfort over time. In general, the solutions of the prior art provide the use of shock-absorbing pads or inserts which tend to dampen shock and chafing. Such inserts or pads, however, fail to ensure the right balance between shock absorption and adaptability to the anatomical parts of the user, with the result that they are too rigid or too saggy, especially in prolonged use.

### PRESENTATION OF THE INVENTION

Therefore, the need is felt to solve the drawbacks and limitations mentioned above with reference to the prior art.

Such need is met by a self-modelling padding according to claim 1, by a garment according to claim 10 and by a manufacturing method according to claim 12.

### DESCRIPTION OF THE DRAWINGS

Further features and advantages of the present invention will be more comprehensible from the following description of preferred embodiments given by way of nonlimiting examples, in which:

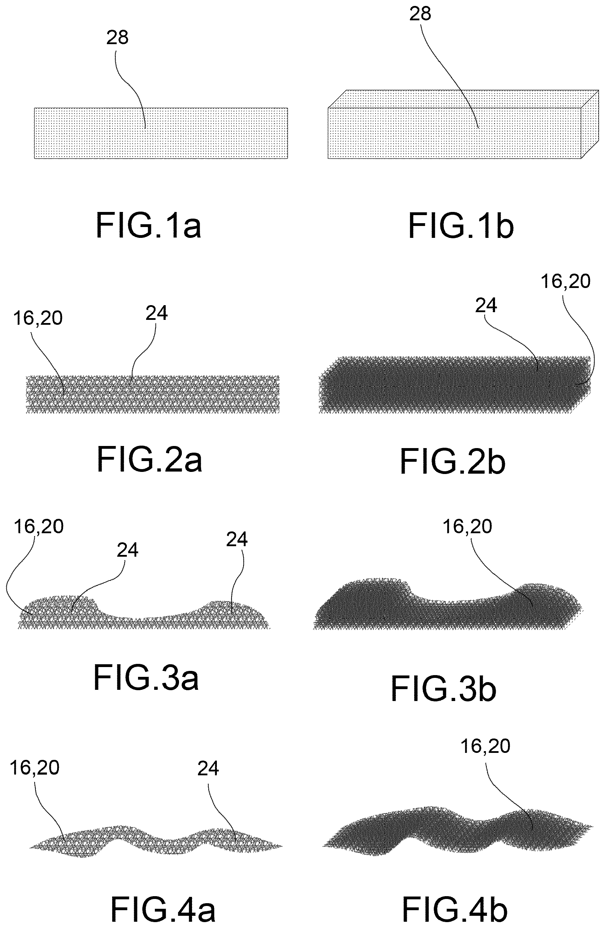

figures 1a-1b show a front view and a perspective view, respectively, of a self-modelling paste for a padding according to an embodiment of the present invention;
figures 2a-2b show a front view and a perspective view, respectively, of a 3D cross-linked open-cell elastomeric matrix for a padding according to an embodiment of the present invention;
figures 3a-3b show a front view and a perspective view, respectively, of a 3D cross-linked and 2D-shaped open-cell elastomeric matrix for a padding according to an embodiment of the present invention;
figures 4a-4b show a front view and a perspective view, respectively, of a 3D cross-linked and 3D-shaped open-cell elastomeric matrix for a padding according to an embodiment of the present invention;

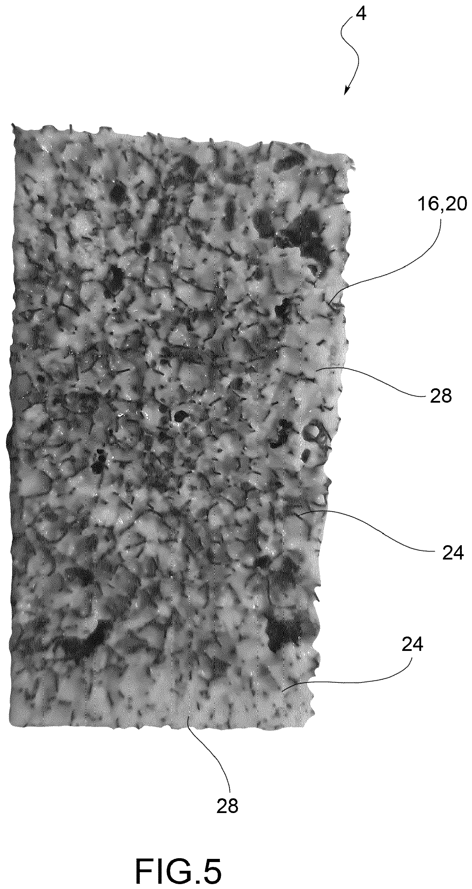

figure 5 shows a perspective view of a padding, according to an embodiment of the present invention;

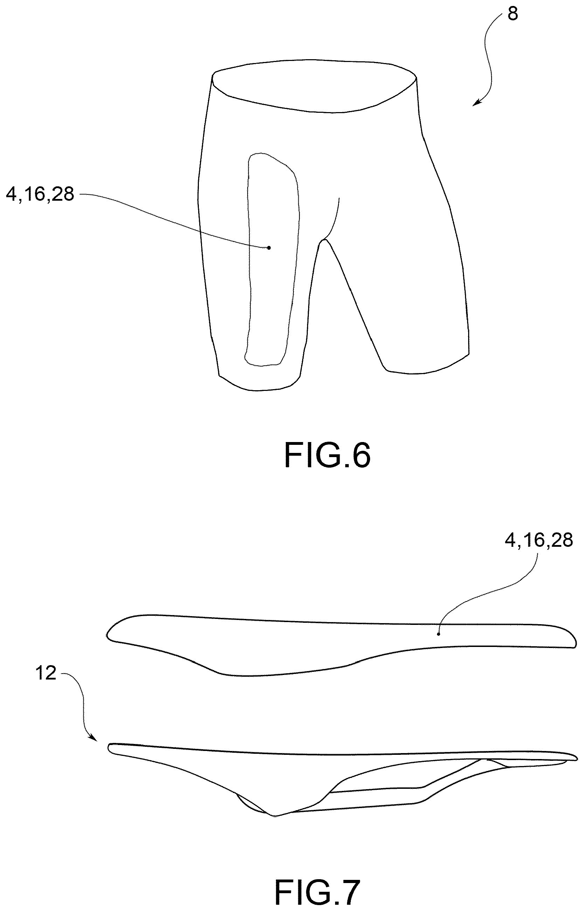

figure 6 shows a perspective view of a possible garment provided with padding according to an embodiment of the present invention; such a padding may have different shapes and positions, including, for example, a trouser bottom, a knee protector, and the like.
figure 7 shows a perspective view of a support provided with a padding according to an embodiment of the present invention.

Elements or parts in common to the embodiments described will be indicated hereafter using the same reference numerals.

### DETAILED DESCRIPTION

With reference to the aforesaid figures, reference numeral 4 indicates a self-modelling padding as a whole in particular for garments 8 or supports 12.

It is worth noting that the concept of garment and supports must be understood in a broad sense; therefore, it includes garments of any kind, either for sports use or not. The concept of garment also includes applications such as gloves, shoes, ski boots, helmets and the like.

The same applies to the concept of support by which we can mean, for example, seating elements, seats for vehicles, saddles for cycles or motorcycles, backrests, knobs and so on.

The self-modelling padding 4 comprises an elastomeric matrix 16, comprising a cross-linked, three-dimensional structure 20 with open cells 24.

Preferably, the elastomeric matrix 16 has a density comprised between 20 kg/m3 and 200 kg/m3.

According to a possible embodiment, the elastomeric matrix 16 has a three-dimensional geometry with open cells 24 of polyhedral shape.

Said cells may have a spherical shape with a diameter comprised from 0.2 mm to 15 mm; the cells may be created by natural expansion, pre-built from a mould, or made by 3D printing.

According to a possible embodiment, said elastomeric matrix 16 has a proportion of voids, consisting of open cells 24, and solids, consisting of a grid delimiting said open cells 24, of not less than 50%.

Advantageously, the elastomeric matrix 16 is configured to have a shape memory. In other words, the elastomeric matrix is made to have a well-defined geometric shape that the elastomeric matrix 16 will tend to return to elastically whenever it is subjected to external deformation.

For example, an elastomeric matrix 16 comprising either normal or cross-linked open-cell PU foams 24 can be used; normally normal PU has smaller, more regular open cells 24, while cross-linked PU has larger, more irregular open cells 24.

The self-modelling padding 4 further comprises a self-modelling paste 28, embedded in said elastomeric matrix 16.

Said self-modelling paste 28, taken individually, exhibits a plastic behaviour. In other words, the self-modelling paste 28, if subjected to an external deformation, tends to remain plastically deformed, i.e., permanently deformed even when the external action ceases or, in any case, tends to return to the non-deformed configuration in an extremely long time, to be substantially a body with plastic behaviour (i.e., without significant elastic return in the dynamic field).

According to an embodiment, the self-modelling paste 28 has a density comprised between 15 kg/m3 and 1000 kg/m3.

For example, said self-modelling paste 28 comprises at least one plant-based mouldable base or paste modified by at least one blowing agent, such as "Expancel".

According to a possible embodiment, the self-modelling padding 4 comprises an outer coating (not shown) which surrounds the elastomeric matrix 16 and the self-modelling paste 28.

According to a possible embodiment, the garment 8 or support 12 has an elastomeric matrix 16 pre-formed to be at least partially counter-shaped relative to a portion or wall of said garment 8.

In other words, the elastomeric matrix can be preshaped so that its shape memory tends to elastically return the self-modelling padding 4 to a specific geometry adapted to achieve the function of the garment (e.g., a knee pad) or of the support (e.g., a bicycle seat).

A manufacturing method of a self-modelling padding, particularly for garments or supports, according to the present invention will now be described.

In particular, the method comprises the steps of:
- providing an elastomeric matrix 16, comprising a three-dimensional, cross-linked structure 20 with open cells 24, in which said elastomeric matrix 16 is configured to have a shape memory,
- providing a self-modelling paste 28 with plastic behavior,
- embedding the self-modelling paste 28 in said elastomeric matrix 16.

According to a possible embodiment, the embedding of the self-modelling paste 28 in the elastomeric matrix 16 comprises the steps of heating the self-modelling paste 28 to model it at the indicated temperature of the expander to be used (normally comprised between 80 degrees and 200 degrees centigrade), inserting the expander in the heated, self-modelling paste 28 which thus becomes liquid, mixing and waiting for it to expand.

Then, when the self-modelling paste 28 is cooled, it is dropped into the elastomeric matrix 16 with appropriate cylinders (normally at low pressure, but it could also be at high pressure). The procedure continues with the step of pre-die-cutting the piece, i.e., the padding 4, which will then be welded, preferably by HF welding, between two retaining membranes.

The invention further relates to a method of making a garment 8 or support 12 comprising the steps of:
- providing a garment 8 or support 12 adapted to interface with an anatomical part of a user on at least one interface wall,
- providing a self-modelling padding 4 having an elastomeric matrix 16 at least partially counter-shaped with respect to said interface wall,
- joining said self-modelling padding 4 to the interface wall.

As can be appreciated from the description above, the present invention makes it possible to overcome the drawbacks presented in the prior art.

In particular, the self-modelling padding has a high ease of deformation to follow the anatomical conformation of the user who wears it or with whom the user interfaces.

In particular, as seen, the padding consists of the union of a self-modelling paste, substantially free from shape memory, and an elastomeric matrix with shape memory.

The self-modelling paste by itself cannot maintain a specific shape/geometry with an elastic return, but it changes continuously according to the stresses it receives from the outside. Therefore, the self-modelling paste cannot adapt quickly and dynamically to external stresses/deformations due to the user. Furthermore, in case of impacts or contacts between parts, the self-modelling paste tends to change its shape slowly and in an inelastic manner. In other words, the paste tends to deform locally and then return, only partially, towards an initial configuration, but in an extremely long time. This means that the self-modelling paste, taken individually, is absolutely unable to adapt dynamically to external stresses.

On the other hand, the elastomeric matrix, provided with shape memory, can control the deformation of the self-modelling paste.

Indeed, the elastomeric matrix can deform and return elastically to its initial position (shape memory) in a short time, adapting to external stresses/deformations.

The elastomeric matrix, by virtue of the fact that it incorporates the self-modelling paste, can draw the self-modelling paste in its own elastic recovery motion. In other words, the elastomeric matrix guides the elastic recovery of the padding, also drawing the self-modelling paste with it, which instead would present a plastic behaviour (permanent deformation as a result of external stress).

For this purpose, it is important that the self-modelling paste is uniformly distributed within the elastomeric matrix; for this reason, the elastomeric matrix preferably has an open-cell lattice structure, so that it can permeate (and thus bias) the entire mass of self-modelling paste in a uniform manner.

In this manner, the padding deformation at any point is distributed over a larger (neighbouring) area to dissipate the impact energy over a larger area and in a manner that involves a greater mass to avoid excessive localized deformation.

The connection between the various parts of the self-modelling paste, through the open cells of the elastomeric matrix, makes it possible to distribute the impact force, the rubbing energy and so on more uniformly and homogeneously. Elastic recovery, which is also rapid, is always guaranteed by the shape memory of the elastomeric matrix.

A person skilled in the art can make numerous changes and variants to the solutions described above, all contained within the scope of protection of the invention defined by the following claims to satisfy contingent, specific needs.

## Claims

1. Self-modelling padding (4), in particular for garments (8) or supports (12), comprising:
- an elastomeric matrix (16), comprising a cross-linked, three-dimensional structure (20) with open cells (24),
- a self-modelling paste (28), embedded in said elastomeric matrix (16),
- wherein said elastomeric matrix (16) is configured to present a shape memory,
- wherein said self-modelling paste (28) has a plastic behaviour.

2. The self-modelling padding (4) according to claim 1, wherein the elastomeric matrix (16) has a density between 20 kg/m³ and 200 kg/m³.

3. The self-modelling padding (4) according to claim 1 or 2, wherein the self-modelling paste (28) has a density between 15 kg/m³ and 1000 kg/m³.

4. The self-modelling padding (4) according to any of the claims from 1 to 3, wherein the elastomeric matrix (16) has a three-dimensional geometry with open cells (24) of polyhedral shape.

5. The self-modelling padding (4) according to any of the claims from 1 to 3, wherein the elastomeric matrix (16) has a three-dimensional geometry with open cells (24) of spherical shape with a diameter between 0.2 mm and 15 mm.

6. The self-modelling padding (4) according to any of the claims from 1 to 5, wherein said elastomeric matrix (16) has a proportion of voids, consisting of open cells (24), and solids, consisting of a grid delimiting said open cells (24), of not less than 50%.

7. The self-modelling padding (4) according to any of the claims from 1 to 6, wherein said self-modelling paste (28) comprises a vegetable modelling paste with at least one expander added.

8. The self-modelling padding (4) according to claim 7, in which said at least one expander comprises 'Expancel'.

9. The self-modelling padding (4) according to any of the claims from 1 to 8, wherein said elastomeric matrix (16) comprises normal or cross-linked, open-cell polyurethane foam (24).

10. The self-modelling padding (4) according to any of the claims from 1 to 9, comprising an outer coating that encloses the elastomeric matrix (16) and self-modelling paste (28).

11. The self-modelling padding (4) according to any of the claims from 1 to 10, wherein the self-modelling paste (28) is embedded in said elastomeric matrix (16) seamlessly.

12. A garment (8) or support (12) comprising the self-modelling padding (4) according to any of the claims from 1 to 11.

13. The garment (8) or support (12) according to claim 12, wherein said elastomeric matrix (16) is pre-formed in such a way that it is at least partially counter- shaped to a portion or wall of said garment (8).

14. Method of making a self-modelling padding (4), in particular for garments (8) or supports (12), comprising the steps of:
- providing an elastomeric matrix (4), comprising a cross-linked, open cell (24) three-dimensional structure (20) in which the elastomeric matrix (16) is configured to present a shape memory,
- providing a self-modelling paste (28) with plastic behaviour,
- embedding the self-modelling paste (28) in said elastomeric matrix (16).

15. Method of making a self-modelling padding (4) according to claim 14, wherein the embedding phase of the self-modelling paste (28) in the elastomeric matrix (16) provides for the steps of:
- heating the self-modelling paste (28) to shape it at the indicated temperature of the expander to be used,
- inserting the expander in the heated, self-modelling paste (28) which thus becomes liquid, mixing and waiting for it to expand,
- waiting for the self-modelling paste to cool (28),
- lowering said self-modelling paste (28) into the elastomeric matrix (16).

16. Method of making a garment (8) or support (12) comprising the steps of:
- providing a garment (8) or support (12) suitable to interface with an anatomical part of a user on at least one interface wall,
- providing a self-modelling padding (4) according to any of the claims from 1 to 11 having an elastomeric matrix (16) at least partially counter-shaped to said interface wall,
- joining said self-modelling padding (4) to the interface wall.
